# EUROPÄISCHE PATENTSCHRIFT

(11) **EP 3 630 511 B1**
(45) Veröffentlichungstag und Bekanntmachung des Hinweises auf die Patenterteilung: **05.05.2021**
(21) Anmeldenummer: 18709288.7
(22) Anmeldetag: 26.02.2018
(51) Int. Cl.: B60G 21/055, B60G 11/20, B29C 65/48, B29C 65/00

(54) **TORSIONSSTAB FÜR EINEN STABILISATOR EINES KRAFTFAHRZEUGS SOWIE STABILISATOR UND VERFAHREN ZUR HERSTELLUNG EINES STABILISATORS**
TORSION BAR FOR A STABILISER OF A MOTOR VEHICLE, AND STABILISER AND METHOD FOR PRODUCING A STABILISER
BARRE DE TORSION POUR STABILISATEUR D'UN VÉHICULE À MOTEUR AINSI QUE STABILISATEUR ET PROCÉDÉ DE FABRICATION D'UN STABILISATEUR

(30) Priorität: 23.05.2017 DE 102017208757
(43) Veröffentlichungstag der Anmeldung: 08.04.2020
(73) Patentinhaber: Audi AG, 85045 Ingolstadt (DE)
(72) Erfinder: SCHINDLER, Sebastian, 85049 Ingolstadt (DE); BÄR, Carsten, 85049 Ingolstadt (DE)
(86) Internationale Anmeldenummer: PCT/EP2018/054676
(87) Internationale Veröffentlichungsnummer: WO 2018/215099

(56) Entgegenhaltungen:
- EP-A2- 0 500 329
- EP-A2- 1 036 680
- WO-A1-2006/042988
- WO-A1-2008/028224
- CN-U- 202 936 363
- DE-A1- 19 542 523
- DE-A1-102009 047 671
- DE-A1-102012 008 995
- DE-A1-102013 111 703
- Hermann Onusseit: "Adhesive Technology - Basic Principles" In: "Adhesive Technology - Basic Principles", 1. Januar 2012 (2012-01-01), Beuth Verlag, Berlin, XP055476218, ISBN: 978-3-410-22842-4 Seiten 95-98, Seite 96, Absatz 3 - Seite 97, Absatz 2
- 3m: "3M Automotive Structural Adhesive Films SAF6045", , 1. August 2002 (2002-08-01), XP055476634, Gefunden im Internet: URL:http://multimedia.3m.com/mws/media/172 333O/3m-structural-adhesive-6045.pdf [gefunden am 2018-05-18]
- 3m: "Structural Adhesive Film SAF6068", , 1. Januar 2013 (2013-01-01), Seiten 1-4, XP055476226, Gefunden im Internet: URL:http://multimedia.3m.com/mws/media/572 344O/3mtm-structural-adhesive-film-saf6068 .pdf [gefunden am 2018-05-17]
- "Method of automatic application of adhesive film, e. g. structural adhesive film", IP.COM JOURNAL, IP.COM INC., WEST HENRIETTA, NY, US, 4. April 2016 (2016-04-04), XP013171181, ISSN: 1533-0001

## Beschreibung

Die Erfindung betrifft ein Verfahren zur Herstellung eines Stabilisators gemäß dem Anspruch 1.

U-förmige Stabilisatoren für Kraftfahrzeuge mit einem im eingebauten Zustand sich im Wesentlichen entlang der Fahrzeugquerrichtung (Y-Achse) erstreckenden Torsionsstab aus einem Faserverbundwerkstoff sowie mit an dessen axialen Enden drehfest angeordneten, sich im Wesentlichen in Fahrzeuglängsrichtung (X-Richtung) erstreckenden metallischen Stabilisatorschenkeln sind aus dem Stand der Technik hinreichend bekannt, vgl. DE 10 2012 008 995 A1. Gemäß der Lehre dieser Druckschrift wird die Welle-Naben-Verbindung zwischen Torsionsstab und Stabilisatorschenkel dadurch hergestellt, indem der Torsionsstab unter Materialverdrängung auf die eine Innenverzahnung aufweisende Nabe aufgepresst wird. Zusätzlich zum Formschluss wird über eine Klebeverbindung ein Stoffschluss erzeugt. Hierzu wird ein flüssiger Kleber vorzugsweise zwischen die Zahnflanken aufgetragen, so dass dieser den werkstoffleeren Raum ausfüllt, der während des Aufpressvorgangs entsteht. Der in flüssiger Form auf die zu verbindenden Teile aufgetragene Kleber dient somit insbesondere sowohl als Schmiermittel während des Aufpressvorgangs als auch nach seiner Aushärtung als Korrosionsschutz. Als nachteilig erweist sich hierbei, dass der flüssige Kleber bei der Fertigung sehr viel Kleberabtrag erzeugt, der nach einer gewissen Stückzahl entweder aufwendig weggeräumt werden muss und somit eine Unterbrechung der Fertigung bedingt, oder als Schmutz auf dem Boden der Produktionsstätte landet, was problematisch für eine DIN zertifizierte Fertigung ist.

Der Erfindung liegt die Aufgabe zu Grunde, ein Verfahren zur Herstellung eines Stabilisators für ein Kraftfahrzeug zur Verfügung zu stellen, das eine vereinfachte, weniger Schmutzabtrag verursachende und gegebenenfalls DIN zertifizierte Fertigung des Stabilisators ermöglicht.

Diese Aufgabe wird durch das Verfahren gemäß dem Patentanspruch 1 gelöst.

Die Unteransprüche 2 bis 6 stellen vorteilhafte Weiterbildungen des Verfahrens dar.

Das erfindungsgemäße Verfahren umfasst die nachfolgenden Schritte:
- Bereitstellen eines Torsionsstabs, der im Bereich seiner axialen Enden mit einer Klebebeschichtung und einer die Klebebeschichtung bedeckenden Schutzschicht beschichtet ist, wobei die Klebebeschichtung als eine feste Klebebeschichtung ausgebildet ist, die nach zumindest teilweiser Entfernung der Schutzschicht aktivierbar ist
- Bereitstellen zweier, jeweils eine Nabenbohrung aufweisende Stabilisatorschenkel
- Fügen des Torsionsstabs mit den Stabilisatorschenkeln durch Einstecken der axialen Enden des Torsionsstabs in die Nabenbohrung der Stabilisatorschenkel, wobei die in die Stabilisatorschenkel eingebrachten Nabenbohrungen und die axialen Enden des Torsionsstabs so dimensioniert sind bzw. eine derartige Passung aufweisen, dass beim Einstecken der axialen Enden des Torsionsstabs in die zugeordneten Nabenbohrungen, die Schutzschicht zumindest teilweise entfernt wird und damit die unter der Schutzschicht angeordnete Klebebeschichtung zumindest teilweise freigelegt wird, so dass die zumindest teilweise freigelegte Klebeschicht in Kontakt mit der Nabenbohrung gelangt
- Aktivieren der zumindest teilweise freigelegten Klebebeschichtung.

Der wesentliche Vorteil des Verfahrens ist, dass aufgrund des trockenen Füge-/Klebeverfahrens die aus dem Stand der Technik bekannten Probleme nicht mehr auftreten, so dass ein schmutzfreieres und damit auch gegebenenfalls DIN zertifizierbares Fertigungsverfahren zur Verfügung gestellt wird.

Um beim Fügen der Bauteile einen Spanabtrag der Schutzschicht in die darunterliegende Klebebeschichtung möglichst auszuschließen, wird vorzugsweise der beim Einstecken der axialen Enden des Torsionsstabs in die Nabenbohrung der Stabilisatorschenkel auftretender Spanabtrag abgesaugt.

Vorzugsweise wird beim Fügen des Torsionsstabs mit den Stabilisatorschenkeln im Bereich der Fügestelle zusätzlich eine formschlüssige Verbindung zwischen Torsionsstab und Stabilisatorschenkel hergestellt. Da nunmehr neben der stoffschlüssigen Verbindung auch noch eine formschlüssige Verbindung zwischen Torsionsstab und Stabilisatorschenkel besteht, ist eine besonders betriebssichere Verbindung zwischen den Bauteilen gewährleistet.

Bevorzugt ist hierfür vorgesehen, dass die Nabenbohrung der Stabilisatorschenkel eine Innenverzahnung aufweist, so dass beim Fügevorgang eine außenzahnartige Kontur in die Schutzschicht eingeschnitten wird.

Gemäß einer besonders bevorzugten Ausführungsform ist vorgesehen, dass die Schutzschicht bereits mit einer zur Innenverzahnung korrespondierenden außenzahnartigen Kontur versehen ist. Die in der Nabenbohrung vorliegende Innenverzahnung und die außenzahnartige Kontur der Schutzschicht sind dabei in ihrer Dimensionierung so aufeinander abgestimmt, dass beim Fügen, d.h. beim axialen Einstecken der Enden des Torsionsstabs in die jeweils zugehörige Nabenbohrung, die Zahnköpfe der Innenverzahnung die Schutzschicht im Bereich zwischen zwei Zähnen der außenzahnartigen Kontur aufschneiden und damit die Klebeschicht in diesem Bereich freilegen.

Denkbar ist zudem, dass neben der bereits erwähnten stoff- und formschlüssigen Verbindung beim Fügen zudem noch eine kraftschlüssige Verbindung zwischen den Bauteilen Torsionsstab und Stabilisatorschenkel hergestellt wird.

Die Aktivierung der Klebstoffkomponente der Klebebeschichtung erfolgt vorzugsweise über mechanisches Aufbrechen der Mikroverkapselung, insbesondere hervorgerufen durch das axiale Einstecken der axialen Enden des Torsionsstabs in die Nabenbohrung der Stabilisatorschenkel, und/oder durch Wärmeeintrag und/oder Zuführung eines Lösemittels und/oder Zuführung von Feuchtigkeit.

Zur Gewährleistung einer vollständigen Aushärtung der stoffschlüssigen Verbindung zwischen Torsionsstab und Stabilisatorschenkel kann als weiterer Verfahrensschritt noch ein Auslagern des gefügten Stabilisators vorgesehen sein.

Bevorzugt ist dabei der Torsionsstab hohlzylindrisch und aus einem Faserverbundmaterial ausgebildet, während die Stabilisatorschenkel aus einer Leichtmetall-Legierung, insbesondere einer Aluminium-Legierung, gefertigt sind.

Bevorzugt umfasst die Klebebeschichtung als Klebstoffkomponente Polyurethane, Silikone, MS-Polymere, Epoxidharze, Kautschuk und/oder Acrylat.

Bevorzugt ist die Kleberbeschichtung in Form eines Mehrkomponentenklebers ausgebildet, wobei zumindest eine der Klebstoffkomponenten in mikroverkapselter Form vorliegt.

Bevorzugt ist die Schutzschicht aus einem formstabilen Material, insbesondere aus einem polyolefinischem Thermoplast ausgebildet.

Weitere Vorteile und Anwendungsmöglichkeiten der Erfindung ergeben sich aus der nachfolgenden Beschreibung in Verbindung mit dem in der Zeichnung dargestellten Ausführungsbeispiel.

In der Zeichnung bedeutet:
- Fig. 1: einen Stabilisator für ein Kraftfahrzeug;
- Fig. 2: eine vergrößerte Darstellung eines axialen Endes des Torsionsstabs des Stabilisators und einen eine Nabenbohrung aufweisenden Abschnitt des Stabilisatorschenkels vor dem Fügen der Bauteile;
- Fig. 3a: eine schematische, vergrößerte Darstellung des Fügebereichs unmittelbar nach dem Fügen, und
- Fig. 3b: der Fügebereich aus Fig. 3a nach dem Abbinden der Klebeschicht.

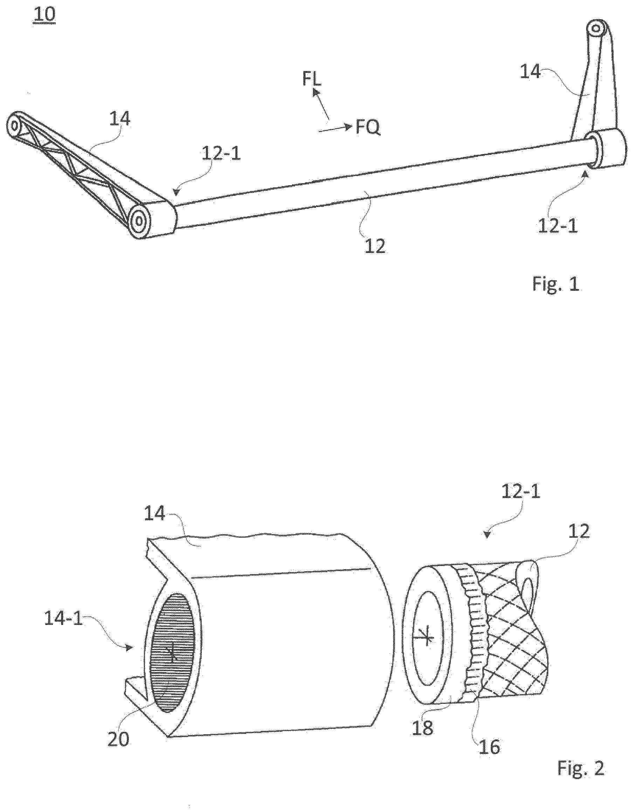

Fig. 1 zeigt einen insgesamt mit der Bezugsziffer 10 bezeichneten Stabilisator für ein Kraftfahrzeug.

Der Stabilisator 10 weist eine im Wesentlichen U-förmige Struktur auf und umfasst einen im eingebauten Zustand im Wesentlichen in Kraftfahrzeugquerrichtung FQ ausgerichteten Torsionsstab 12 sowie zwei an dessen axialen Enden 12-1 drehfest angeordnete, im eingebauten Zustand in Fahrzeuglängsrichtung FL ausgerichtete Stabilisatorschenkel 14.

Zur Gewährleistung eines möglichst geringen Gewichts ist vorliegend der Torsionsstab 12 hohlzylindrisch aus einem Faserverbundwerkstoff ausgebildet und die Stabilisatorschenkel 14 sind aus einer Aluminium-Legierung gefertigt.

Zur Herstellung der drehfesten Verbindung weist - wie Fig. 2 zu entnehmen ist - der abschnittsweise dargestellte Stabilisatorschenkel 14 eine Nabenbohrung 14-1 auf, in die das dargestellte axiale Ende 12-1 des Torsionstabs einsteckbar ist.

Wie Fig. 2 weiter zeigt, ist dabei der Torsionsstab 12 im Bereich seines abschnittsweise dargestellten axialen Endes 12-1 mit einer Klebebeschichtung 16 und einer die Klebebeschichtung 16 vollständig bedeckenden Schutzschicht 18 beschichtet.

Die als feste Schicht ausgebildete Klebebeschichtung 16, d.h. die Klebebeschichtung 16 liegt im festen Aggregatzustand vor, ist vorliegend in Form eines reaktiven Schmelzklebestoffs ausgebildet, der durch eine entsprechende Wärmezufuhr aktivierbar ist.

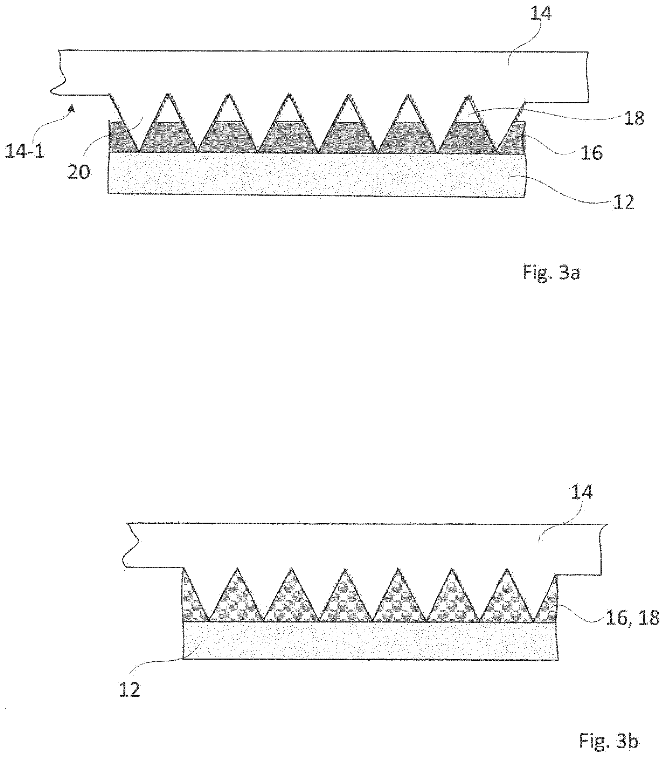

Wie Fig. 2 weiter zeigt, weist die Nabenbohrung 14-1 eine Innenverzahnung 20 auf. Wie insbesondere Fig. 3a zu entnehmen ist, sind dabei die Nabenbohrung 14-1 bzw. die Innenverzahnung 20 und der Außendurchmesser des axialen Endes 12-1 in ihrer Passung so dimensioniert, dass beim Fügen, d.h. beim axialen Einstecken des dargestellten Endes 12-1 in die Nabenbohrung 14-1, die Zähne der Innenverzahnung 20 eine außenzahnartige Kontur in die Schutzschicht 18 einschneiden und dabei die Schutzschicht 18 zumindest teilweise entfernen, so dass Bereiche der Innenverzahnung 20 in direkten Kontakt mit der Klebebeschichtung 16 gelangen.

Aufgrund der nunmehr eingeschnittenen außenzahnartigen Kontur in der Schutzschicht 18 ist nach dem Fügen ein Formschluss zwischen den Bauteilen Torsionsstab 12 und Stabilisatorschenkel 14 ausgebildet.

Die stoffschlüssige Verbindung zwischen den Bauteilen wird nach einer Aktivierung der Klebebeschichtung 16, d.h. vorliegend durch Wärmezufuhr, hergestellt. Hierzu kann der nunmehr gefügte Stabilisator 10 auch ausgelagert werden, damit die Reaktion vollständig ablaufen kann. Die Situation nach vollständiger Aushärtung ist schematisch in Fig. 3b dargestellt.

Als besonders vorteilhaft erweist sich hierbei, dass aufgrund der Ausbildung der Klebebeschichtung 16 in Form einer festen Schicht, d.h. die Klebebeschichtung 16 liegt im festen Aggregatzustand vor, eine unterbrechungsfreie und damit schnelle Fertigung des Stabilisators 10 ermöglicht wird, da im Gegensatz zum Stand der Technik ein flüssiger Kleberabtrag nicht anfällt, so dass die gemäß dem Stand der Technik notwendige Unterbrechung der Fertigung für die Entfernung des flüssigen Kleberabtrags nicht mehr erforderlich ist. Ein weiterer Vorteil ist, dass aufgrund des Wegfalls des flüssigen Kleberabtrags eine saubere Fertigung und damit insbesondere auch eine DIN zertifizierbare Fertigung des Stabilisators 10 ermöglicht wird.

## Patentansprüche

1. Verfahren zur Herstellung eines Stabilisators (10) für ein Kraftfahrzeug, umfassend die Schritte:
- Bereitstellen eines Torsionsstabs (12), der im Bereich seiner axialen Enden (12-1) mit einer Klebebeschichtung (16) und einer die Klebebeschichtung (16) bedeckenden Schutzschicht (18) beschichtet ist, wobei die Klebebeschichtung (16) als eine feste, nach zumindest teilweiser Entfernung der Schutzschicht (18) aktivierbare Klebebeschichtung ausgebildet ist;
- Bereitstellen zweier, jeweils eine Nabenbohrung (14-1) aufweisende Stabilisatorschenkel (14);
- Fügen des Torsionsstabs (12) mit den Stabilisatorschenkeln (14) durch Einstecken der axialen Enden (12-1) des Torsionsstabs (12) in die Nabenbohrungen (14-1) der Stabilisatorschenkel (14), wobei die Nabenbohrungen (14-1) und die axialen Enden (12-1) des Torsionsstabs (12) in ihrer Passung so dimensioniert sind, dass beim Einstecken die die Klebebeschichtung (16) bedeckende Schutzschicht (18) zumindest teilweise entfernt wird;
- Aktivieren der zumindest teilweise freigelegten Klebebeschichtung (16).

2. Verfahren zur Herstellung eines Stabilisators (10) nach Anspruch 1, **dadurch gekennzeichnet, dass** ein beim Fügen auftretender Spanabtrag der Schutzschicht (18) abgesaugt wird.

3. Verfahren zur Herstellung eines Stabilisators (10) nach Anspruch 1 oder 2, **dadurch gekennzeichnet, dass** beim Fügen zusätzlich eine formschlüssige Verbindung zwischen dem Torsionsstab (12) und den Stabilisatorschenkeln (14) hergestellt wird.

4. Verfahren zur Herstellung eines Stabilisators (10) nach Anspruch 3, **dadurch gekennzeichnet, dass** die Nabenbohrung (14-1) der Stabilisatorschenkel (14) eine Innenverzahnung (20) aufweist, mittels derer beim Fügen eine außenzahnartige Kontur in die Schutzschicht (18) eingeschnitten wird.

5. Verfahren zur Herstellung eines Stabilisators (10) nach Anspruch 3, **dadurch gekennzeichnet, dass** die Nabenbohrung (14-1) der Stabilisatorschenkel (14) eine Innenverzahnung (20) aufweist und dass die Schutzschicht (18) mit einer hierzu korrespondierenden außenzahnartigen Kontur versehen ist, wobei die Innenverzahnung (20) und die außenzahnartige Kontur so dimensioniert sind, dass beim Fügen durch die Zahnköpfe der Innenverzahnung (20) die Schutzschicht im Bereich zwischen zwei Zähnen der außenzahnartigen Kontur entfernt wird.

6. Verfahren zur Herstellung eines Stabilisators (10) nach einem der vorgenannten Ansprüche, **dadurch gekennzeichnet, dass** über Aufbrechen der Mikroverkapselung, Wärmeeintrag, Lösemittel und/oder Feuchtigkeit die Klebstoffkomponente der Klebeschichtung (16) aktiviert wird.

## Claims

1. Method for manufacturing a stabiliser (10) for a motor vehicle, comprising the steps of:
- providing a torsion bar (12) which is coated in the region of its axial ends (12-1) with an adhesive coating (16) and a protective layer (18) covering the adhesive coating (16), whereby the adhesive coating (16) is designed as a solid fixed adhesive coating which can be activated after at least a partial removal of the protective layer (18);
- providing two stabiliser legs (14) each having a hub bore (14-1);
- joining the torsion bar (12) with the stabiliser legs (14) by inserting the axial ends (12-1) of the torsion bar (12) into the hub bores (14-1) of the stabiliser legs (14), wherein the hub bores (14-1) and the axial ends (12-1) of the torsion bar (12) are designed such that the protective layer (18) covering the adhesive coating (16) is at least partially removed during insertion;
- activating the at least partially removed adhesive coating (16).

2. Method for manufacturing a stabiliser (10) according to claim 1, **characterised in that** a chip removal from the protective layer (18) is suctioned off during insertion.

3. Method for manufacturing a stabiliser (10) according to claim 1 or 2, **characterised in that** a positive connection between the torsion bar (12) and the stabiliser legs (14) is also established during insertion.

4. Method for manufacturing a stabiliser (10) according to claim 3, **characterised in that** the hub bore (14-1) of the stabiliser legs (14) has an internal toothing (20) by means of which an external tooth-like contour is cut into the protective layer (18) during insertion.

5. Method for manufacturing a stabiliser (10) according to claim 3, **characterised in that** the hub bore (14-1) of the stabiliser legs (14) has an internal toothing (20) and that the protective layer (18) is provided with a corresponding external tooth-like contour, wherein the internal toothing (20) and the external tooth-like contour are designed such that the protective layer in the area between two teeth of the external tooth-like contour is removed when the tooth tips of the internal toothing (20) come together.

6. Method for manufacturing a stabiliser (10) according to one of the preceding claims, **characterised in that** the adhesive component of the adhesive coating (16) is activated by breaking the microencapsulation, introducing heat, solvents and/or moisture.

## Revendications

1. Procédé de fabrication d'un stabilisateur (10) pour un véhicule automobile, comprenant les étapes consistant à :
- fournir une barre de torsion (12) qui est revêtue dans la zone de ses extrémités axiales (12-1) d'un revêtement adhésif (16) et d'une couche de protection (18) recouvrant le revêtement adhésif (16), dans lequel le revêtement adhésif (16) est conçu comme un revêtement adhésif solide qui peut être activé après l'enlèvement au moins partiel de la couche de protection (18) ;
- fournir deux branches de stabilisateur (14) présentant chacune un alésage de moyeu (14-1) ;
- assembler la barre de torsion (12) avec les branches de stabilisateur (14) en enclenchant les extrémités axiales (12-1) de la barre de torsion (12) dans les alésages de moyeu (14-1) des branches de stabilisateur (14), dans lequel les alésages de moyeu (14-1) et les extrémités axiales (12-1) de la barre de torsion (12) sont dimensionnés dans leur ajustement de sorte que la couche de protection (18) recouvrant le revêtement adhésif (16) soit au moins partiellement retirée lors de l'enclenchement ;
- activer le revêtement adhésif (16) au moins partiellement exposé.

2. Procédé de fabrication d'un stabilisateur (10) selon la revendication 1, **caractérisé en ce qu'**un enlèvement de copeaux de la couche de protection (18) se produisant lors de l'assemblage est aspiré.

3. Procédé de fabrication d'un stabilisateur (10) selon la revendication 1 ou 2, **caractérisé en ce qu'**une connexion par complémentarité de forme est en outre réalisée entre la barre de torsion (12) et les branches de stabilisateur (14) lors de l'assemblage.

4. Procédé de fabrication d'un stabilisateur (10) selon la revendication 3, **caractérisé en ce que** l'alésage de moyeu (14-1) des branches de stabilisateur (14) présente une denture intérieure (20), au moyen de laquelle un contour extérieur denté est découpé dans la couche de protection (18) lors de l'assemblage.

5. Procédé de fabrication d'un stabilisateur (10) selon la revendication 3, **caractérisé en ce que** l'alésage de moyeu (14-1) des branches de stabilisateur (14) présente une denture intérieure (20) et **en ce que** la couche de protection (18) est dotée d'un contour extérieur denté correspondant à celle-ci, dans lequel la denture intérieure (20) et le contour extérieur denté sont dimensionnés de sorte que, lors de l'assemblage, la couche de protection est retirée dans la zone entre deux dents du contour extérieur denté par les têtes de dent de la denture intérieure (20).

6. Procédé de fabrication d'un stabilisateur (10) selon l'une quelconque des revendications précédentes, **caractérisé en ce que** le composant adhésif du revêtement adhésif (16) est activé par rupture du micro-encapsulage, apport de chaleur, solvant et/ou humidité.
